# EUROPEAN PATENT SPECIFICATION

(11) **EP 2 453 603 B1**
(45) Date of publication and mention of the grant of the patent: **30.07.2014**
(21) Application number: 10306243.6
(22) Date of filing: 10.11.2010
(51) Int. Cl.: H04J 14/02

(54) **A method to assign a signal in a transparent optical network using multiple channel spaced grids**
Verfahren zur Zuweisung eines Signals in einem transparenten optischen Netzwerk unter Verwendung von mit Abstand angeordneten Rastern mit mehreren Kanälen
Procédé d'attribution d'un signal dans un réseau optique transparent utilisant plusieurs grilles espacées par des canaux

(43) Date of publication of application: 16.05.2012
(73) Proprietor: Alcatel Lucent, 75007 Paris (FR)
(72) Inventor: Morea, Annalisa, 91620, Nozay (FR); Rival, Olivier, 91620, Nozay (FR)
(74) Representative: Sciaux, Edmond

(56) References cited:
- WO-A1-2004/109958
- WO-A2-01/39380
- US-A1- 2001 013 962
- US-A1- 2003 072 052

## Description

The technical domain of the invention is the domain of communication networks, and particularly transparent optical networks.

More particularly, the invention concerns a method to optimally assign a signal to a central wavelength in an optical network, in presence of optical grids of different channel spacing.

To transmit information, an optical network usually employs optical fibre as a transport link between two nodes. Over such an optical fibre, in systems such as Wavelength Division Multiplexing, WDM, total bandwidth is parted into channels of equal width and consequently of equal spacing. Each channel may also be referred to by its central wavelength. Such partition or comb is also referred to as a grid. Initially used grids were of 100 GHz spaced channels.

The improvement of transparent transport performance has enabled the reduction of the channel spacing in the optical comb, decreasing from 100 GHz to 50 GHz. Furthermore, thanks to new filtering technologies channel spacing could be further reduced down to 25 GHz or 12,5 GHz. Each channel spacing corresponds to a wavelength grid.

In a transparent network, different grids may coexist due to the presence of filter devices with different characteristics in nodes, for instance various generations of wavelength selective switches, WSS. However, each link uses a single grid.

However, the presence of optical grids with different channel spacing may create fragmentation. Wavelength continuity between successive adjacent links is not guaranteed as with uniform channel spacing. Former usual routing strategies may lead to significant stranding (under-utilization) of bandwidth.

Recent WSS have been developed so as to exhibit a flat filtering function over the wavebands they are switching, i.e. as weak as possible amplitude and phase ripple between channels of a same waveband.

US-A-2003/0072052 discloses that multiplexed wavelengths on a narrow grid are split into wider spaced sparse wavelength groups which are offset from one another whilst remaining aligned with the narrow grid.

WO2004/109958 shows the use of different grids for separate spectral bands.

The object of the present invention is a solution to minimize the waste of bandwidth in mixed-grid transparent networks.

The object of the invention is a method of assigning a signal to a central wavelength through a path crossing successive links in a transparent optical network comprising nodes connected by a plurality of links, each link using an optical grid parting the total optical bandwidth into central wavelengths defining channels of equal width, with a constant channel spacing, the optical grids of the plurality of links being aligned, the method comprising the steps of:
- determining, through the network, the widest channel spaced grid and the narrowest channel spaced grid;
- parting, at each link through said path, the total optical bandwidth into central wavelengths spaced and aligned with the narrowest channel spaced grid;
- weighting, at each link through said path, each central wavelength with a weight indicative of the occupation of said central wavelength at said link and of the alignment of said central wavelength with said widest channel spaced grid;
- combining, the weights encountered through said path for each central wavelength; and
- assigning said signal to be routed to a central wavelength with an optimal combined weight.

According to another feature of the invention, the weight of a central wavelength is 0 when the central wavelength is occupied, and otherwise the weight is a value chosen between a minimum strictly positive value and a maximum strictly positive value as a decreasing function of the distance between said central wavelength and a nearest central wavelength aligned with said widest channel spaced grid.

According to another feature of the invention, the weight is augmented by a positive bonus value when a central wavelength is neighbouring an occupied central wavelength not aligned with said widest channel spaced grid.

According to another feature of the invention said bonus value is lesser than the smallest difference between any two weight values.

According to another feature of the invention, the weight of a central wavelength is equal to:
- a value of 0 when the central wavelength is occupied;
- a minimum value of 2 when the central wavelength is farthest from being aligned with said widest channel spaced grid;
- a value of 4 when the central wavelength is second farthest from being aligned with said widest channel spaced grid, if that case occurs;
- a value of 2^(k-1)+2, 3<=k<=N, when the central wavelength is k^{th} farthest from being aligned with said widest channel spaced grid, if that case occurs;
- until reaching the maximum value of 2^ (N-1)+2 when the central wavelength is aligned with said widest channel spaced grid, where N is the number of different channel spaced grids in the network,
and wherein the bonus value is +1.

According to another feature of the invention, said combine step uses an operator defined by:
- the combination of two non zero weights is equal to their sum,
- the combination of two weights is equal to zero, when at least one of them is equal to zero.

According to another feature of the invention, the optimal combined weight is:
- the maximum of combined weights if at least one link crossed by the path uses a widest channel spaced grid, and
- the minimum of non zero combined weights if none of the links crossed by the path uses a widest channel spaced grid.

According to another feature of the invention, when several signals of different width have to be assigned, the widest signal is assigned first.

The invention also concerns a system able to implement the aforementioned method.

Others features, details and advantages of the invention will become more apparent from the detailed illustrating description given hereafter with respect to the drawings on which:
- figure 1 is a diagram showing three different grids and their alignment,
- figure 2 is a diagram showing two 50 GHz signals routed and the resulting wastes of bandwidth,
- figure 3 is a diagram illustrating a path comprising four different grids and the principles of weighting,
- figure 4 is a diagram illustrating bonus and combining of weights.

The invention takes place in a transparent optical network. Such a network comprises nodes. Said nodes are connected by links comprising optical fibre. For each such link a grid is defined by either the source node or the destination node or both in conjunction, according to their respective characteristics.

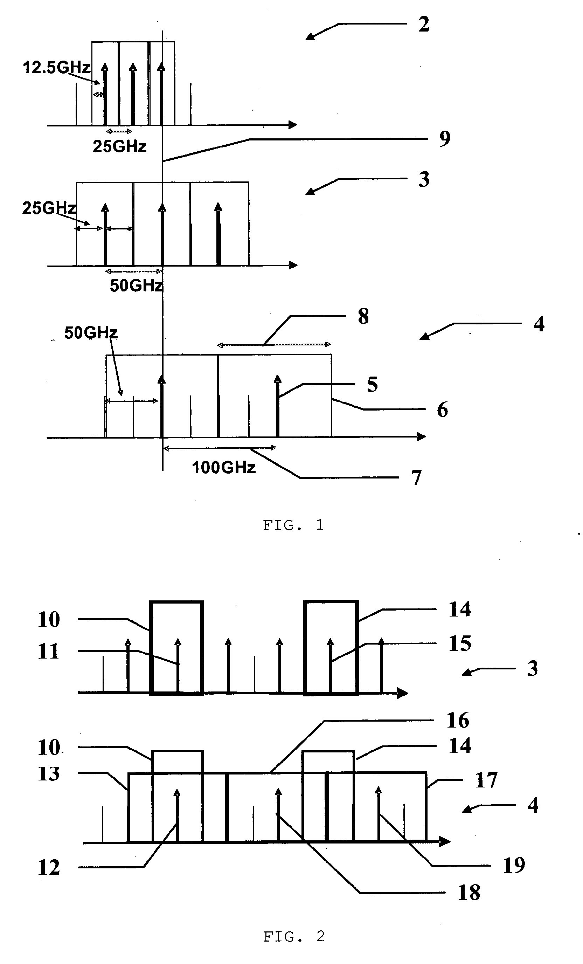

As illustrated on figure 1, a grid 2, 3, 4 is defined by a constant channel width 8 or equivalently by a constant channel spacing 7 or equivalently by a constant spacing 7 between adjacent central wavelengths 5. Said different spacings are multiple, and e.g. power of two multiple, from one grid to another. In figure 1, reference 2 is a 25 GHz grid, 3 is a 50 GHz grid and 4 is a 100 GHz grid. Typical spacings are taken among 100 GHz, 50 GHz, 25 GHz and 12,5 GHz. Moreover said grids 2, 3, 4, although differently spaced are all aligned. This means that the central wavelength 9 of a channel of a wider spaced grid 4 always corresponds to a central wavelength 9 of a channel of a narrower spaced grid 3, 2. In others words, a central wavelength 9 defined in a wider channel spaced grid 4, is exactly matched by a corresponding central wavelength 9 in a narrower channel spaced grid.

When a signal is routed, it must be assigned to a central wavelength 5 across several links forming a path. An optical signal is modulated on top of a carrier whose wavelength 5 is set at the centre of a chosen channel 6, that is, the central wavelength 5 of said channel 6. An occupied channel in a 50 GHz grid therefore blocks +/- 25 GHz on both sides of its central wavelength. Similarly a channel 6 in a 100 GHz grid starts at -50 GHz and finishes at +50 GHz with respect to the selected central wavelength 5.

Once a central wavelength/channel is chosen it must be the same along the whole path. No overlap in wavelengths is allowed, and when a central wavelength/channel is assigned to a signal in presence of links with different channel spacing, the chosen channel may lead to a waste in bandwidth.

With reference to figure 2 the assignment of a e.g. 50 GHz signal 10, in a 50 GHz grid 3, to a central wavelength 11 aligned with the 100 GHz grid 4, that is corresponding to central wavelength 12, occupies one 100 GHz channel 13, that is, 100 GHz in bandwidth. Although the assignment of another 50 GHz signal 14 to a central wavelength 15 not aligned with the 100 GHz grid 4, (not aligned with either wavelength 18 or 19), may occupy two 100 GHz channels 16 and 17, thereby requiring the use of a total of 200 GHz. This can lead to waste of bandwidth on the 100 GHz grid 4.

The present invention concerns a method to optimize the use of bandwidth in the case of mixed channel spacing, that is, different grids along a routing path.

Several grids may be found/used in a given optical network. The number of grids may be any number greater than or equal to two, among a set of power of two multiple channel spacing grids. For instance an optical network may comprise any at least two differently spaced grids among the illustrative set of 12,5 GHz, 25 GHz, 50 GHz and 100 GHz grids.

The method starts with a first step of determining, through the network, the widest channel spaced grid 4 and the narrowest channel spaced grid 1, since the corresponding widest and narrowest spacings govern the method. As will be explained later these widest and narrowest spacings may not necessarily be the widest and narrowest spacings encountered along the routing path considered, since not all the grids present in the network are present in the path.

In a second step, at each link through the path, the total optical bandwidth is parted into central wavelengths spaced and aligned with the central wavelengths of said narrowest channel spaced grid 1.

E.g., if 25 GHz and 100 GHz grids are present in the optical network, a 25GHz aligned grid, corresponding to the narrowest spacing, is used to provide a supporting canvas to weight central wavelengths.

In a third step, each such central wavelength is then weighted with a weight value. Said weight is indicative of the occupation of said central wavelength at said link and of the alignment of said central wavelength with the widest channel spaced grid.

In a fourth step, along the path associated to the signal to route, central wavelength by central wavelength, the weights are combined to determine combined weights.

In a fifth step, the signal to be routed is assigned to a central wavelength with an optimal combined weight.

In the following will be explained the way of weighting central wavelengths. A weight of zero is allocated to an already assigned central wavelength, that is, to any central wavelength occupied. So doing, and in combination of the particular use of said zero value in combining weights, an occupied central wavelength has no chance to be assigned to a signal.

In order to keep channels free in the links using widest channel spacing grids, central wavelengths aligned with the wavelengths of said widest channel spacing grid are preferred and given the maximum weight.

If a central wavelength is free, the weight allocated is a non zero value. Said weight value is indicative of the (quality of the) alignment of said central wavelength with the widest channel spaced grid 4. Said weight value may be chosen between a minimum strictly positive value and a maximum strictly positive value and may be allocated as a decreasing function of the distance between said central wavelength and a nearest central wavelength aligned with said widest channel spaced grid 4.

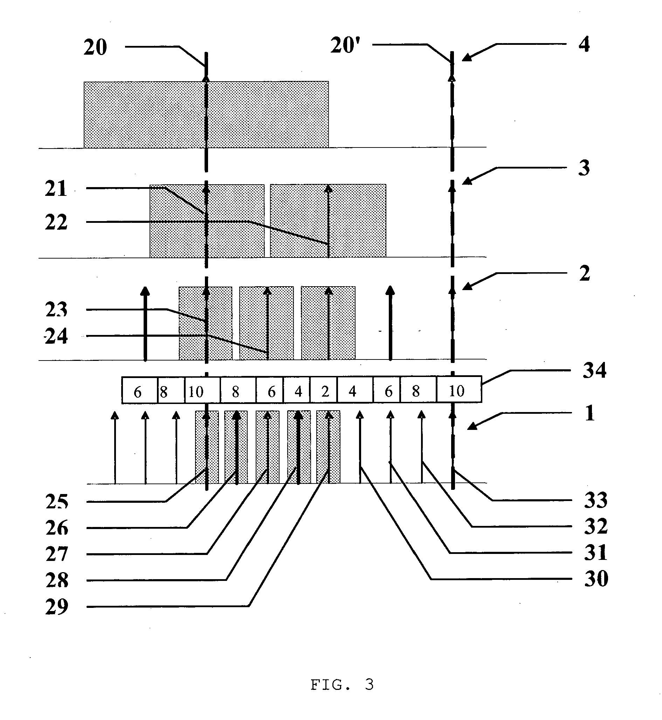

This is better explained with reference to an example as illustrated in figure 3. Figure 3 shows four diagrams corresponding to four links pertaining to a path. Link 4 uses a 100 GHz grid. Link 3 uses a 50 GHz grid. Link 2 uses a 25 GHz grid. Link 1 uses a 12.5 GHz grid. The order of grids in a path does not matter. Said different grids are all aligned in that they share wavelength 20 corresponding respectively to wavelength 21, 23 and 25. The narrowest channel spaced grid in the network is supposed to be a 12.5 GHz, and said 12.5 GHz grid 1 is used to define the granularity and the canvas of weights. The widest channel spaced grid in the network is supposed to be a 100 GHz, and the weight for any central wavelength is determined depending on the distance to a wavelength 20, 20' present in said 100 GHz grid 4.

When considering the 12.5 GHz grid 1, central wavelengths 25 and 33 are aligned with central wavelengths 20, 20' of the 100 GHz grid and thus receive the maximum weight value. Central wavelength 29 is the farthest wavelength from said central wavelengths 20, 20' of the 100 GHz grid and thus receive the minimum weight value, although a positive value. Intermediary central wavelengths 28, 27, 26 are respectively second, third and fourth farthest wavelength from said central wavelengths 20, 20' and thus receive increasing weights in between minimum weight value and maximum weight value.

When considering the 25 GHz grid 2, central wavelength 23 is aligned with central wavelength 20 of the 100 GHz grid and thus receive the maximum weight value. Central wavelength 24 corresponds with central wavelength 27 of the weighting grid 1 and receives the same weight.

When considering the 50 GHz grid 3, central wavelength 21 is aligned with central wavelength 20 of the 100 GHz grid and thus receive the maximum weight value. Central wavelength 22 corresponds with central wavelength 29 of the weighting grid 1 and receives the same weight, that is, the minimum value, since 29 is also the farthest from being aligned central wavelength.

By doing so aligned wavelengths are preferred. However it may occur that a non aligned wavelength is selected and assigned to a signal. Once a central wavelength not aligned with widest channel spaced grid has been assigned to a signal at least one corresponding channel of the widest spacing may no longer be used. In order not to waste too much bandwidth in that particular case a bonus value may be used for compensating. In order to take this case into account a bonus positive value may be added to the weight. When a central wavelength is neighbouring an occupied central wavelength not aligned with said widest channel spaced grid 4, then the weight of said central wavelength is augmented by the bonus value.

In a preferred embodiment, the bonus value is taken inferior to the smallest difference between any two weight values. So doing the corrective effect of the bonus is such that its influence is lesser than the effect of a neighbouring with a widest channel spaced grid.

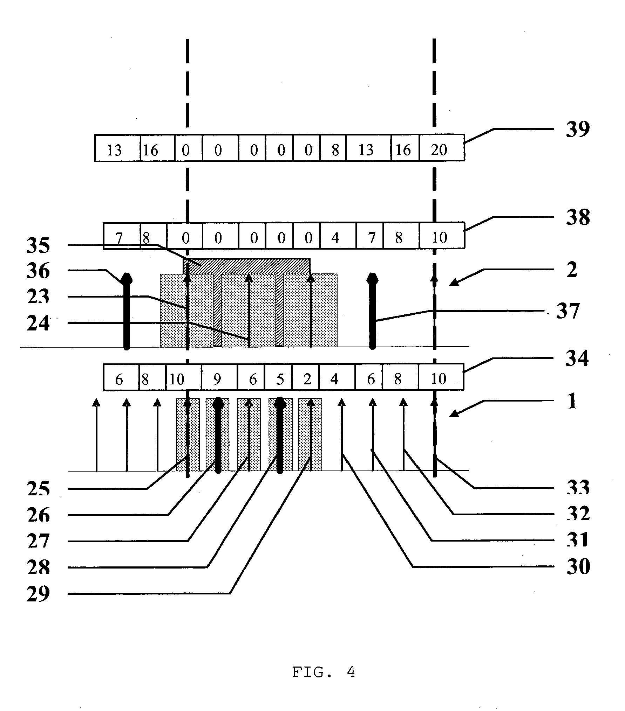

As an example of an embodiment, illustrated on figures 3 and 4, a minimum value of 2 may be chosen. Said minimum value is affected to central wavelength farthest from being aligned with said widest channel spaced grid 4. On the other end, a maximum value of 2^(N-1)+2 may be affected to central wavelength aligned with said widest channel spaced grid 4, where N is the number of different channel spaced grids in the network, and ^ is the power operator.

With N = 2, the maximum value is 4, and they are only two levels of neighbourhood. A central wavelength is either aligned and receives a weight of 4, or a central wavelength is not aligned (and is farthest from being aligned) and receives a weight of 2.

With N = 4, as illustrated in figure 3 and 4, the maximum value is 10, and there are five levels of neighbourhood. A central wavelength aligned 25, 33, receives a weight of 10. A central wavelength 29 farthest from being aligned receives a weight of 2. A central wavelength 28, 30 second farthest from being aligned receives a weight of 4. A central wavelength 27, 31 third farthest from being aligned receives a weight of 6. A central wavelength 26, 32 fourth farthest from being aligned receives a weight of 8. So, each level of neighbourhood adds +2 to the weight, until reaching the maximum value of 2^(N-1)+2 when the central wavelength is aligned with said widest channel spaced grid 4. The weight is a decreasing function of the distance to alignment. The general formula is thus a value of weight of 2^(k-1)+2 assigned to the kth farthest from being aligned central wavelength 28, 30.

So doing the difference between the weight values of any two adjacent levels of neighbourhood is 2. The bonus value may then advantageously be chosen equal to 1. The allocated weights are figured facing their central wavelengths in frame 34.

For intermediary spaced grids 2, 3, weights are determined according to the corresponding wavelength in said narrowest channel spaced grid 1. Central wavelength 21 of 50 GHz grid 3 is aligned and receives a weight of 10, equal to the weight of corresponding wavelength 25 in narrowest channel spaced grid 1. Central wavelength 22 of 50 GHz grid 3 receives a weight of 2, equal to the weight of corresponding wavelength 29 in grid 1. Central wavelength 23 of 25 GHz grid 2 is aligned and receives a weight of 10, equal to the weight of corresponding wavelength 25 in grid 1. Central wavelength 24 of 25 GHz grid 2 receives a weight of 6, equal to the weight of corresponding wavelength 27 in grid 1.

Now referring to figure 4, will be explained the bonus allocation mechanism. A 50 GHz width signal 35 is supposed to have been assigned to central wavelength 24 in 25 GHz grid 2, which is not a wavelength aligned with the 100 GHz grid 4. So doing, at least one 100 GHz channel is occupied. In order not to waste too much bandwidth, since the 100 GHz channel is already used, the remaining parts of said partly used 100 GHz channel are allocated a bonus value. Thus, a bonus value is added to central wavelengths 36, 37 neighbouring the occupied wavelength 24. The new weights so determined for the 25 GHz grid 2 are figured in frame 38. Former weights of 6 for said wavelengths 36 and 37 are now 7, since a bonus of 1 has been added. In addition, the weights of all occupied channels have been turned to 0.

Still referring to figure 4, the bonus mechanism is now applied to 12,5 GHz grid 1. On said grid 1, only central wavelength 28 is occupied. Since it is a non aligned central wavelength, both its neighbours 27 and 29 receive a bonus.

When all links in a path have been weighted, the weights can be combined, wavelength by wavelength, along said path. A combine operator may be defined by: the combination of two non zero weights is equal to their sum, and the combination of two weights whose at least one equal zero is equal to zero. Said combine operator is thus a sort of sum operator, but with an absorbing element being zero. Multiplication could also equivalently be used. So doing, for a path, with a resolution of the narrowest spaced grid, each central wavelength is assigned a combined weight. Due to the effect of 0, as soon as a wavelength is used, at least partially in only one link, its combined weight becomes 0 and it then have no chance of being assigned. Otherwise, if a central wavelength is free along the whole path, it receives a combined weight resulting from the sum of all the weights allocated to said central wavelength along the path indicative of the neighbouring of said central wavelength to a wavelength of the widest channel spaced grid 4, including if it applies, some bonus.

The combined allocated weights for the previous example are shown facing their central wavelengths in frame 39.

Based on these combined weights, an optimal combined weight may be determined in order to assign a signal to a wavelength of optimal weight. If several equal optimal weights can be determined, one of them is randomly selected.

According to a first strategy, the optimal combined weight is always the maximum of combined weights.

According to a second strategy, the optimal combined weight is the maximum of combined weights only if at least one link crossed by the path uses a widest channel spaced grid 4. And if no widest channel spaced grid can be found along the path, since there is no use to align over such a widest channel spaced grid 4, an optimal wavelength may be chosen instead as the minimum of non zero combined weights.

Signal to be assigned generally arrive on the fly to be assigned. However, if the case occurs of several signals arriving at the same time, according to a preferred embodiment, they are assigned a wavelength starting by the widest signals, and then proceeding with the narrower signals.

## Claims

1. A method of assigning a signal (10) to a central wavelength (5) through a path crossing successive links (1, 2, 3, 4) in a transparent optical network comprising nodes connected by a plurality of links, each link (1, 2, 3, 4) using an optical grid parting the total optical bandwidth into central wavelengths (5) defining channels (6) of equal width (8), with a constant channel spacing (7), the optical grids of the plurality of links being aligned, the method being ***characterized in that*** it comprises the steps of:
- determining, through the network, the widest channel spaced grid (4) and the narrowest channel spaced grid (1),all the optical grids being aligned together at one wavelength of the narrowest spacing grid;
- parting, at each link (1, 2, 3, 4) through said path, the total optical bandwidth into central wavelengths (5) spaced and aligned with the narrowest channel spaced grid (1);
- weighting, at each link (1, 2, 3, 4) through said path, each central wavelength (5) with a weight indicative of whether said central wavelength (5) at said link is already assigned to a signal and of the alignment of said central wavelength (5) with said widest channel spaced grid (4);
- combining, the weights encountered through said path for each central wavelength (5); and
- assigning said signal (10) to be routed to a central wavelength (5) with an optimal combined weight.

2. The method of claim 1, wherein the weight of a central wavelength (21-33) is 0 when the central wavelength is already assigned, and otherwise the weight is a value chosen between a minimum strictly positive value and a maximum strictly positive value as a decreasing function of the distance between said central wavelength (21-33) and a nearest central wavelength (20, 20') aligned with said widest channel spaced grid (4).

3. The method of claim 1 or 2, wherein the weight is augmented by a positive bonus value when a central wavelength (21-33) is neighbouring an occupied central wavelength not aligned with said widest channel spaced grid (4).

4. The method of claim 3, wherein said bonus value is lesser than the smallest difference between any two weight values.

5. The method of any one of claims 1 to 4, wherein the weight of a central wavelength (21-33) is equal to:
- a value of 0 when the central wavelength (21-33) is already assigned;
- a minimum value of 2 when the central wavelength (22, 29) is farthest from being aligned with said widest channel spaced grid (4);
- a value of 4 when the central wavelength (28, 30) is second farthest from being aligned with said widest channel spaced grid (4), if that case occurs;
- a value of 2^(k-1)+2, 3<=k<=N, when the central wavelength (28, 30) is k^{th} farthest from being aligned with said widest channel spaced grid (4), if that case occurs;
- until reaching the maximum value of 2^(N-1)+2 when the central wavelength (21, 23, 25, 33) is aligned with said widest channel spaced grid (4), where N is the number of different channel spaced grids (1, 2, 3, 4) in the network,
and wherein the bonus value is +1.

6. The method of any one of claims 1 to 5, wherein said combine step uses an operator defined by:
- the combination of two non zero weights is equal to their sum,
- the combination of two weights is equal to zero, when at least one of them is equal to zero.

7. The method of any one of claims 1 to 6, wherein the optimal combined weight is:
- the maximum of combined weights if at least one link (1, 2, 3, 4) crossed by the path uses a widest channel spaced grid (4), and
- the minimum of non zero combined weights if none of the links (1, 2, 3, 4) crossed by the path uses a widest channel spaced grid (4).

8. The method of any one of claims 1 to 7, wherein when several signals (10) of different width are to be assigned, the widest signal is assigned first.

9. A system to assign a signal (10) to a central wavelength (5) through a path crossing successive links (1, 2, 3, 4) in a transparent optical network comprising nodes connected by a plurality of links, each link (1, 2, 3, 4) using an optical grid parting the total optical bandwidth into central-wavelengths (5) defining channels (6) of equal width (8), with a constant channel spacing (7), the optical grids of the plurality of links being aligned, the system being ***characterized in that*** it comprises:
- determining means arranged to determine, through the network, the widest channel spaced grid (4) and the narrowest channel spaced grid (1), all the optical channels grids being aligned together at one wavelength of the narrowest spacing grid;
- parting means arranged to part, at each link (1, 2, 3, 4) through said path, the total optical bandwidth into central wavelengths (5) spaced and aligned with the narrowest channel spaced grid (1);
- weighting means arranged to weigh, at each link (1, 2, 3, 4) through said path, each central wavelength (5) with a weight indicative of the fact that said central wavelength (5) at said link is already assigned to a signal
and of the alignment of said central wavelength (5) with said widest channel spaced grid (4);
- combining means arranged to combine, the weights encountered through said path for each central wavelength (5); and
- assigning means arranged to assign said signal (10) to be routed to a central wavelength (5) with an optimal combined weight.

10. The system of claim 9, further comprising weight computing means arranged to compute weights according to the method of any one of claims 2 to 7 .

## Patentansprüche

1. Verfahren zur Zuweisung eines Signals (10) an eine Zentralwellenlänge (5) über einen Pfad, welcher aufeinanderfolgende Übertragungsstrecken (1, 2, 3, 4) in einem transparenten optischen Netzwerk mit anhand einer Vielzahl von Übertragungsstrecken miteinander verbundenen Knoten durchquert, wobei jede Übertragungsstrecke (1, 2, 3, 4) ein optisches Raster verwendet, um die gesamte optische Bandbreite in Zentralwellenlängen (5), welche Kanäle (6) gleicher Breite (8) mit einem konstanten Kanalabstand (7) definieren, aufzuteilen, wobei die optischen Raster der Vielzahl von Übertragungsstrecken zueinander ausgerichtet sind, wobei das Verfahren **dadurch gekennzeichnet ist, dass** es die folgenden Schritte umfasst:
- Vermitteln, über das Netzwerk, des Rasters mit dem breitesten Kanalabstand (4) und des Rasters mit dem schmalsten Kanalabstand (1), wobei alle optischen Raster an einer Wellenlänge des Rasters mit dem schmalsten Kanalabstand zueinander ausgerichtet sind;
- Aufteilen, an jeder Übertragungsstrecke (1, 2, 3, 4) auf dem besagten Pfad, der gesamten optischen Bandbreite in Zentralwellenlängen (5), welche mit dem Raster mit dem schmalsten Kanalabstand (1) in Abständen angeordnet und ausgerichtet sind;
- Gewichten, an jeder Übertragungsstrecke (1, 2, 3, 4) auf dem besagten Pfad, einer jeden Zentralwellenlänge (5) mit einem Gewicht, welches dafür, ob die besagte Zentralwellenlänge (5) an der besagten Übertragungsstrecke bereits einem Signal zugewiesen ist, und für die Ausrichtung der besagten Zentralwellenlänge (5) mit dem besagten Raster mit dem breitesten Kanalabstand (4) indikativ ist;
- Kombinieren der für jede Zentralwellenlänge (5) auf dem besagten Pfad aufgetretenen Gewichte; und
- Zuweisen des besagten zu routenden Signals (10) an eine Zentralwellenlänge (5) mit einem optimalen kombinierten Gewicht.

2. Verfahren nach Anspruch 1, wobei das Gewicht einer Zentralwellenlänge (21-33) 0 beträgt, wenn die Zentralwellenlänge bereits zugewiesen ist, und anderenfalls das Gewicht ein zwischen einem minimalen strikt positiven Wert und einem maximalen strikt positiven Wert als eine abnehmende Funktion der Distanz zwischen der besagten Zentralwellenlänge (21-33) und einer mit dem besagten Raster mit dem breitesten Kanalabstand (4) ausgerichteten nächstgelegene Wellenlänge (20, 20') gewählter Wert ist.

3. Verfahren nach Anspruch 1 oder 2, wobei das Gewicht um einen positiven Bonuswert erhöht wird, wenn eine zentrale Wellenlänge (21-33) mit einer belegten Zentralwellenlänge, welcher nicht mit dem Raster mit dem breitesten Kanalabstand (4) ausgerichtet ist, benachbart ist.

4. Verfahren nach Anspruch 3, wobei der besagte Bonuswert niedriger als die kleinste Differenz zwischen zwei beliebigen Gewichtswerten ist.

5. Verfahren nach einem beliebigen der Werte 1 bis 4, wobei das Gewicht einer Zentralwellenlänge (21-33) gleich den folgenden Werte ist:
- Ein Wert von 0, wenn die Zentralwellenlänge (21-33) bereits zugewiesen ist;
- ein Mindestwert von 2, wenn die Zentralwellenlänge (22, 29) am weitesten von einer Ausrichtung mit dem besagten Raster mit dem breitesten Kanalabstand (4) entfernt ist;
- ein Wert von 4, wenn die Zentralwellenlänge (28, 30) am zweitweitesten von einer Ausrichtung mit dem besagten Raster mit dem breitesten Kanalabstand (4) entfernt ist, wenn dieser Fall eintritt;
- ein Wert von 2 ^ (k-1) +2, 3<=k<=N, wenn die Zentralwellenlänge (28, 30) am k-weitesten von einer Ausrichtung mit dem besagten Raster mit dem breitesten Kanalabstand (4) entfernt ist, wenn dieser Fall eintritt;
- bis der Höchstwert von 2 ^ (N-1) +2 erreicht wird, wenn die zentrale Wellenlänge (21, 23, 25, 33) mit dem besagten Raster mit dem breitesten Kanalabstand (4) ausgerichtet ist, wobei N die Anzahl der Raster mit verschiedenen Kanalabständen (1, 2, 3, 4) im Netzwerk ist,
und wobei der Bonuswert +1 ist.

6. Verfahren nach einem beliebigen der Ansprüche 1 bis 5, wobei der besagte Schritt des Kombinierens einen wie folgt definierten Operator verwendet:
- Die Kombination von zwei von Null verschiedenen Gewichten entspricht deren Summe,
- Die Kombination von zwei Gewichten entspricht Null, wenn mindestens eines der Gewichte gleich Null ist.

7. Verfahren nach einem beliebigen der Ansprüche 1 bis 6, wobei das optimale kombinierte Gewicht beträgt:
- Das Maximum der kombinierten Gewichte, wenn mindestens eine von dem Pfad durchquerte Übertragungsstrecke (1, 2, 3, 4) ein Raster mit dem breitesten Kanalabstand (4) verwendet, und
- das Minimum der von Null unterschiedlichen kombinierten Gewichte, wenn keine der von dem Pfad durchquerte Übertragungsstrecken (1, 2, 3, 4) ein Raster mit dem breitesten Kanalabstand (4) verwendet.

8. Verfahren nach einem beliebigen der Ansprüche 1 bis 7, wobei, wenn mehrere Signale (10) unterschiedlicher Breite zuzuweisen sind, das breiteste Signal zuerst zugewiesen wird.

9. System zur Zuweisung eines Signals (10) an eine Zentralwellenlänge (5) über einen Pfad, welcher aufeinanderfolgende Übertragungsstrecken (1, 2, 3, 4) in einem transparenten optischen Netzwerk mit anhand einer Vielzahl von Übertragungsstrecken miteinander verbundenen Knoten durchquert, wobei jede Übertragungsstrecke (1, 2, 3, 4) ein optisches Raster verwendet, um die gesamte optische Bandbreite in Zentralwellenlängen (5), welche Kanäle (6) gleicher Breite (8) mit einem konstanten Kanalabstand (7) definieren, aufzuteilen, wobei die optischen Raster der Vielzahl von Übertragungsstrecken zueinander ausgerichtet sind, wobei das System **dadurch gekennzeichnet ist, dass** es umfasst:
- Ermittlungsmittel, ausgelegt für das Ermitteln, über das Netzwerk, des Rasters mit dem breitesten Kanalabstand (4) und des Rasters mit dem schmalsten Kanalabstand (1), wobei alle optischen Kanalraster an einer Wellenlänge des Rasters mit dem schmalsten Abstand zueinander ausgerichtet sind;
- Aufteilungsmittel, ausgelegt für das Aufteilen, an jeder Übertragungsstrecke (1, 2, 3, 4) auf dem besagten Pfad, der gesamten optischen Bandbreite in Zentralwellenlängen (5), welche mit dem Raster mit dem schmalsten Kanalabstand (1) in Abständen angeordnet und ausgerichtet sind;
- Gewichtungsmittel, ausgelegt für das Gewichten, an jeder Übertragungsstrecke (1, 2, 3, 4) auf dem besagten Pfad, einer jeden Zentralwellenlänge (5) mit einem Gewicht, welches für die Tatsache, dass die besagte Zentralwellenlänge (5) an der besagten Übertragungsstrecke bereits einem Signal zugewiesen ist, und für die Ausrichtung der besagten Zentralwellenlänge (5) mit dem besagten Raster mit dem breitesten Kanalabstand (4) indikativ ist;
- Kombinierungsmittel, ausgelegt für das Kombinieren der für jede Zentralwellenlänge (5) auf dem besagten Pfad aufgetretenen Gewichte; und
- Zuweisungsmittel, ausgelegt für das Zuweisen des besagten zu routenden Signals (10) an eine Zentralwellenlänge (5) mit einem optimalen kombinierten Gewicht.

10. System nach Anspruch 9, weiterhin umfassend Gewichtsberechnungsmittel, ausgelegt für die Berechnung von Gewichten gemäß dem Verfahren eines beliebigen der Ansprüche 2 bis 7.

## Revendications

1. Procédé d'attribution d'un signal (10) à une longueur d'onde centrale (5) à travers un chemin traversant des liaisons successives (1, 2, 3, 4) dans un réseau optique transparent comprenant des noeuds connectés par une pluralité de liaisons, chaque liaison (1, 2, 3, 4) utilisant une grille optique divisant la largeur de bande optique totale en longueurs d'onde centrales (5) définissant des canaux (6) de largeur égale (8), avec un espacement de canaux constant (7), les grilles optiques de la pluralité de liaisons étant alignées, le procédé étant **caractérisé en ce qu'**il comprend les étapes suivantes : et la
- déterminer, à travers le réseau, la grille espacée de canaux la plus large (4) et la grille espacée de canaux la plus étroite (1), toutes les grilles optiques étant alignées ensemble à une longueur d'onde de la grille d'espacement la plus étroite ;
- diviser, au niveau de chaque liaison (1, 2, 3, 4) à travers ledit chemin, la largeur de bande optique totale en longueurs d'onde centrales (5) espacées et alignées avec la grille espacée de canaux la plus étroite (1) ;
- pondérer, au niveau de chaque liaison (1, 2, 3, 4) à travers ledit chemin, chaque longueur d'onde centrale (5) avec une pondération indiquant si ladite longueur d'onde centrale (5) au niveau de ladite liaison est déjà attribuée à un signal et indiquant l'alignement de ladite longueur d'onde centrale (5) avec ladite grille espacée de canaux la plus large (4) ;
- combiner, les pondérations rencontrées à travers ledit chemin pour chaque longueur d'onde centrale (5) ; et
- attribuer ledit signal (10) devant être acheminé à une longueur d'onde centrale (5) avec une pondération combinée optimale.

2. Procédé selon la revendication 1, dans lequel la pondération d'une longueur d'onde centrale (21 à 33) est 0 lorsque la longueur d'onde centrale est déjà attribuée, sinon la pondération est une valeur choisie entre une valeur positive strictement minimum et une valeur positive strictement maximum comme une fonction décroissante de la distance entre ladite longueur d'onde centrale (21 à 33) et une longueur d'onde centrale la plus proche (20, 20') alignée avec ladite grille espacée de canaux la plus large (4).

3. Procédé selon la revendication 1 ou 2, dans lequel la pondération est augmentée par une valeur bonus positive lorsqu'une longueur d'onde centrale (21 à 33) est voisine d'une longueur d'onde centrale occupée non alignée avec ladite grille espacée de canaux la plus large (4).

4. Procédé selon la revendication 3, dans lequel ladite valeur bonus est inférieure à la différence la plus faible entre n'importe quelles deux valeurs de pondération.

5. Procédé selon l'une quelconque des revendications 1 à 4, dans lequel la pondération d'une longueur d'onde centrale (21 à 33) est égale à :
- une valeur de 0 lorsque la longueur d'onde centrale (21 à 33) est déjà attribuée ;
- une valeur minimum de 2 lorsque la longueur d'onde centrale (22, 29) est la première longueur d'onde la plus éloignée à être alignée avec ladite grille espacée de canaux la plus large (4) ;
- une valeur de 4 lorsque la longueur d'onde centrale (28, 30) est la deuxième longueur d'onde la plus éloignée à être alignée avec ladite grille espacée de canaux la plus large (4), le cas échéant ;
- une valeur de 2^(k-1)+2, 3<=k<=N, lorsque la longueur d'onde centrale (28, 30) est la k^{ème} longueur d'onde la plus éloignée à être alignée avec ladite grille espacée de canaux la plus large (4), le cas échéant ;
- jusqu'à atteindre la valeur maximum de 2^(N-1)+2 lorsque la longueur d'onde centrale (21, 23, 25, 33) est alignée avec ladite grille espacée de canaux la plus large (4), lorsque N est le nombre de grilles espacées de canaux différentes (1, 2, 3, 4) dans le réseau,
et dans lequel la valeur bonus est +1.

6. Procédé selon l'une quelconque des revendications 1 à 5, dans lequel ladite étape de combinaison utilise un opérateur défini comme suit :
- la combinaison de deux pondérations non nulles est égale à leur somme,
- la combinaison de deux pondérations est égale à zéro, lorsqu'au moins une d'elles est égale à zéro.

7. Procédé selon l'une quelconque des revendications 1 à 6, dans lequel la pondération combinée optimale est :
- le maximum des pondérations combinées si au moins une liaison (1, 2, 3, 4) traversée par le chemin utilise une grille espacée de canaux la plus large (4), et
- le minimum des pondérations combinées non nulles si aucune des liaisons (1, 2, 3, 4) traversées par le chemin n'utilise une grille espacée de canaux la plus large (4).

8. Procédé selon l'une quelconque des revendications 1 à 7, dans lequel lorsque plusieurs signaux (10) de largeur différente doivent être attribués, le signal le plus large est attribué en premier.

9. Système pour attribuer un signal (10) à une longueur d'onde centrale (5) à travers un chemin traversant des liaisons successives (1, 2, 3, 4) dans un réseau optique transparent comprenant des noeuds connectés par une pluralité de liaisons, chaque liaison (1, 2, 3, 4) utilisant une grille optique divisant la largeur de bande optique totale en longueurs d'onde centrales (5) définissant des canaux (6) de largeur égale (8), avec un espacement de canaux constant (7), les grilles optiques de la pluralité de liaisons étant alignées, le système étant ***caractérisé en ce qu'**il* comprend :
- moyens de détermination conçus pour déterminer, à travers le réseau, la grille espacée de canaux la plus large (4) et la grille espacée de canaux la plus étroite (1), toutes les grilles de canaux optiques étant alignées ensemble à une longueur d'onde de la grille d'espacement la plus étroite ;
- moyens de division conçus pour diviser, au niveau de chaque liaison (1, 2, 3, 4) à travers ledit chemin, la largeur de bande optique totale en longueurs d'onde centrales (5) espacées et alignées avec la grille espacée de canaux la plus étroite (1) ;
- moyens de pondération conçus pour pondérer, au niveau de chaque liaison (1, 2, 3, 4) à travers ledit chemin, chaque longueur d'onde centrale (5) avec une pondération indiquant le fait que ladite longueur d'onde centrale (5) au niveau de ladite liaison est déjà attribuée à un signal
et indiquant l'alignement de ladite longueur d'onde centrale (5) avec ladite grille espacée de canaux la plus large (4) ;
- moyens de combinaison pour combiner, les pondérations rencontrées à travers ledit chemin pour chaque longueur d'onde centrale (5) ; et
- moyens d'attribution conçus pour attribuer ledit signal (10) devant être acheminé à une longueur d'onde centrale (5) avec une pondération combinée optimale.

10. Système selon la revendication 9, comprenant en outre des moyens de calcul de pondération conçus pour calculer des pondérations conformément au procédé selon l'une quelconque des revendications 2 à 7.
